# EUROPEAN PATENT SPECIFICATION

(11) **EP 2 982 829 B1**
(45) Date of publication and mention of the grant of the patent: **28.06.2017**
(21) Application number: 15179406.2
(22) Date of filing: 31.07.2015
(51) Int. Cl.: E21B 41/00, F16P 3/12

(54) **SAFETY SYSTEM FOR CONTROLLING A DANGEROUS AREA OF A DRILLING MACHINE**
SICHERHEITSSYSTEM ZUR KONTROLLE EINES GEFAHRENBEREICHS EINER BOHRMASCHINE
SYSTÈME DE SÉCURITÉ PERMETTANT DE CONTRÔLER UNE ZONE DANGEREUSE D'UNE MACHINE DE FORAGE

(30) Priority: 06.08.2014 IT MI20141442
(43) Date of publication of application: 10.02.2016
(73) Proprietor: Soilmec S.p.A., 47522 Cesena (FC) (IT)
(72) Inventor: FONTANA, Pietro, 47522 CESENA (FC) (IT)
(74) Representative: Ottazzo, Marco Francesco Agostino

(56) References cited:
- FR-A1- 2 885 401
- GB-A- 2 479 749
- US-A1- 2010 237 714

## Description

The present invention relates to a safety system for drilling or excavating equipment, particularly but not exclusively employed in a drilling or excavating machine to control the dangerous area surrounding the machine and to interrupt the dangerous maneuvers of the machine itself. The present invention also relates to an excavating machine comprising the aforesaid safety system.

More specifically, the safety system according to the present invention is used to prevent an operator from coming into contact with rotating or moving members of the drilling machine that are directly involved in the drilling process. The field of the present invention relates indeed to drilling or excavating machines that, operating in several technological contexts, may require personnel assigned to auxiliary services to perform manual operations in areas around the machine that are exposed to dangers, in particular in proximity to the guide antenna or mast on which slides the rotating head or table, also called "rotary head", and in proximity to the drill axis on which are located the shafts used for the excavating, drilling, mixing, jetting and driving processes. Consequently, the term dangerous area means, in the present description, the region of space around the guide antenna, where the rotary head slides, and the region of space in proximity to the drilling area.

Drilling machines require operations by personnel that can be generally subdivided into three types: first assembly operations, maintenance operations and operations concurrent with work maneuvers. In the first two types of operations, usually carried out in the factory, the experience of the assigned personnel, the specific nature of the problems and of habitual practice, the servicing operations are not deemed particularly risky. In the third type of operation, in which manual operations are required during work phases, e.g. to add or remove the drill shafts limited to the area in proximity to the guide antenna, exposure to risk is very high because the operations are carried out on moving parts and are routine. This physiologically entails a decrease in alertness of those who repeatedly perform the same action. Moreover, these operations must be rapid, in order to minimize the servicing time and increase productivity.

For these reasons, to enable the operator, during the normal operations of the drilling machine, to access the movable parts of the machine itself that are directly involved in the drilling process, it is suggested to provide, around the dangerous area, protections such as fixed guards, movable guards with interlock, sensitive protection devices or a combination thereof. These protections must prevent access to the dangerous area during any dangerous movement.

If the movable guards are opened or if the sensitive protection devices are activated by the entrance of an individual or of an object into the dangerous area, dangerous drilling maneuvers must be blocked rapidly and safety. Regulations require the instantaneous blocking of at least the rotation of the shaft and, alternatively, the simultaneous and instantaneous blocking both of the rotation, and of the translation movements of the rotary head.

As long as the movable guards remain open and as long as the sensitive devices remain activated, it is possible to reactivate the rotation of the shafts and the sliding of the rotary head only by selecting, through an appropriate selector, a limited operating mode. In this limited operating mode, all maneuvers are appropriately slowed down to such values as to eliminate the danger and allow the inspection of the parts or the execution of the manual operations. To return once again to the normal operating mode, i.e. the work mode, the interlocked movable guards must have been closed and restored or the sensitive protection devices must no longer be active and must have been restored, the normal operating mode of the machine must have been selected with an appropriate selector, and the start command must have been activated.

The use of movable barriers or guards with interlock, constructed in the form of containment cages, positioned around the working members of the drilling machine to isolate the dangerous area, is known in the art. Said containment cages generally consist of one or more support frameworks, constructed by means of tubular elements or shaped metal plates that constitute their external contour, as well as by (metallic or plastic) grids, by nets or by other screens that occupy the area enclosed by said contour. The support framework can, for example, be hinged in points integral with the mast in such a way that they can open by rotating on a horizontal plane, when the mast is positioned vertically, and leave clear the access to the dangerous areas.

In the closed position, i.e. in the working condition, these types of barriers or guards have considerable sizes, generally exceeding the contour of the rotary head or of the clamps in the horizontal direction to be able to include the rotary head itself within the protected volume. These sizes are due to the need of delimiting a sufficiently large dangerous area, i.e. of keeping the operator sufficiently distant from the danger represented by the rotating shafts. In addition, it is necessary to provide for the possible presence of mechanical means to aid loading, e.g. automated loader arms, so-called rack or revolver loaders, or articulating cranes. To be able to operate correctly, these mechanical means to aid loading should be contained within the protected volume defined by the barriers.

However, the aforesaid significant sizes constitutes, for several reasons, a severe limitation of the operating capabilities of the drilling machine. In particular, these sizes do not allow to carry out drillings in proximity to walls or angles formed by two walls, because as the machine approaches the walls, the barriers come in contact with the walls, preventing the drilling shafts from approaching any further. In this way, some types of drilling "flush with the wall" that are typical of consolidation and restructuring works could not be accomplished. In the same way, to make it possible to open the barriers, it is necessary to have sufficient space around the mast to enable the rotation or translation motion without interferences with obstacles along the trajectory of motion. The presence of the barriers, therefore, constitutes an obstacle to maneuvers and restricts the drillings that can be carried out.

The aforementioned limitations are not compatible with the restricted spaces of the construction sites where drilling machines operate, in particular in the urban environment, where the machine's agility is fundamental. The size of the barrier, even in the open position, hampers the addition or subtraction of shafts in the drill stem. Moreover, the need to continually open and close the barriers to load the shafts determines an increase in working times and requires the hydraulic and electrical systems to be more complex to manage the actuation of the barriers.

An additional limitation of this solution consists of the increase in the weight of the drilling machine, with the consequent reduction in its stability because of the frontal overhang positioning of the barriers. Use in horizontal drillings (tie rods) with very small heights, below 1.6 meters, would make it also necessary to position barriers along the entire length of the mast, thereby always protecting the operator, regardless of his position. However, in this case these barriers would have points of contact and interference with the ground and would make it difficult to load the shafts, because the movable parts for access to the shafts have considerable weight, since the length of the shafts themselves may reach even ten meters.

**< Document** FR 2 885 401 A1 **discloses a drilling or excavating equipment and a respective safety system according to the preamble of claim 1. >**

The purpose of the present invention is therefore to provide a safety system for drilling or excavating equipment that overcomes the aforementioned drawbacks of the prior art, preventing direct contact with the rotating parts of the machine and eliminating, at the source, the risks that can emerge in the dangerous area during the operating steps of the machine, without limiting the operating capabilities and at the same time allowing construction site personnel to access the dangerous area easily and safely during loading or tool maintenance operations.

In particular, this purpose is attained through the presence of at least one platform that is sensitive to the presence of humans. The sensitive platform comprises connecting and regulating means to be associated with the drilling machine, e.g. with the respective guide antenna, so that said sensitive platform can advantageously be integral with the guide antenna itself and, by its own connecting and regulating means, it can also be regulated to extend along a plane and preferably to be maintained substantially parallel to the ground and raised from the ground at a minimum height. The platform extends along a plane oriented to at least partially, but preferably completely, cover the dangerous area so that a person must necessarily step onto the platform itself in order to access said area. This safety system is able to detect the presence of a person on the platform through the weight change caused by that person. In other words, the platform is provided with devices that are sensitive, for example but not limiting, to pressure over a predetermined detection area, defined within or in proximity to the dangerous area. In this condition, the platform sends appropriate control signals to the drilling machine to carry out the necessary checks and feedback.

Another purpose of the present invention is to provide a safety system for drilling or excavating equipment that is simple to install, that can be applied on different types of machines (e.g., machines for foundation drilling, for consolidation drilling or for drilling water wells), that is economical and that does not limit, with its dimensions, especially its height, the ability to drill and to approach obstacles or walls of existing buildings, while not limiting the stability of the machine. In the same way, the safety system must not limit the movements and the runs of the rotary head both in the longitudinal direction and in the transverse direction with respect to the guide antenna.

These purposes according to the present invention are attained by producing a safety system for drilling or excavating equipment as described in claim 1.

Additional features of the invention are outlined in the dependent claims, which are an integral part of the present description.

The features and the advantages of a safety system for drilling or excavating equipment according to the present invention will become more readily apparent from the following exemplifying and not limiting description, referred to the accompanying schematic drawings in which:

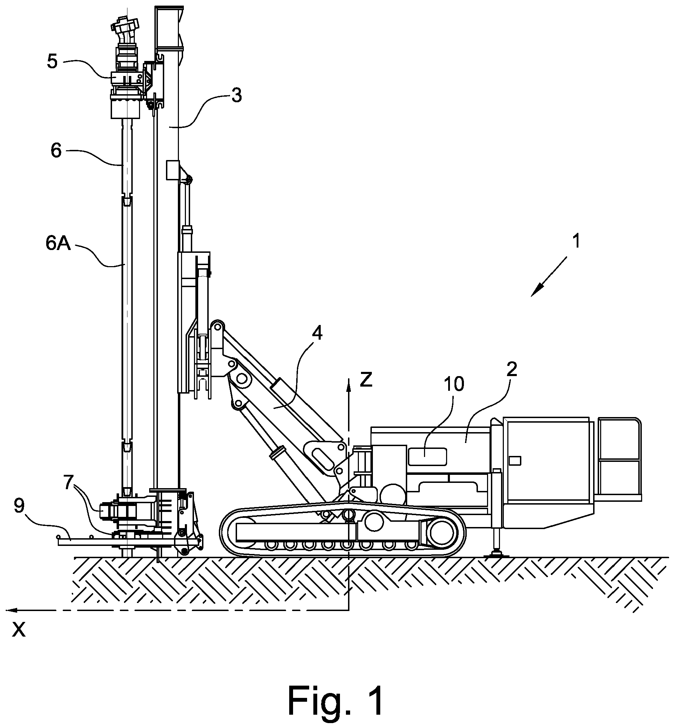

Figure 1 is a side view of a drilling equipment or machine provided with a safety system on the basis of a first embodiment of the present invention, applied to the machine in drilling configuration, in particular with the guide antenna substantially vertical; machine provided with a safety system according to a first embodiment of the present invention, applied to the machine in drilling configuration, in particular with the guide antenna substantially vertical in proximity to the centerline plane X-Z;

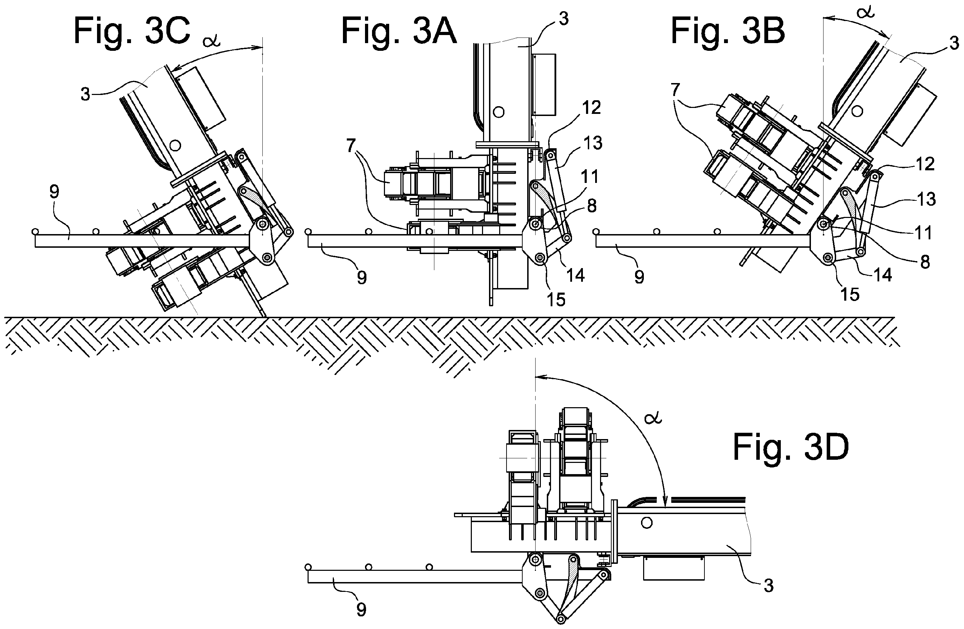

Figures 3A-3D are detailed side views of a first embodiment of the safety system applied to the guide antenna of a drilling machine, in which said safety system is shown in different drilling configurations, respectively with the guide antenna vertical (Figure 3A), with the guide antenna inclined frontally (Figure 3B), with the guide antenna inclined backwards (Figure 3C) and with the guide antenna horizontal or in transport conditions (Figure 3D);

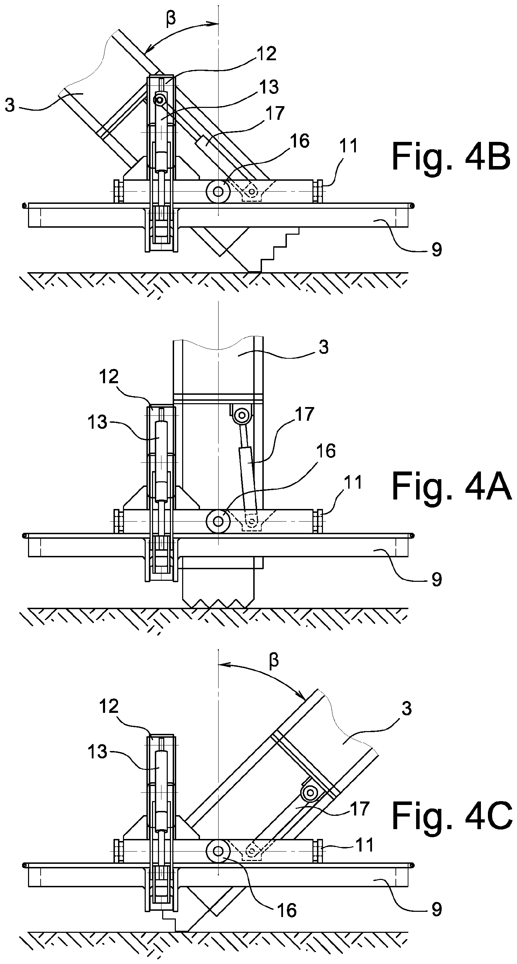

Figures 4A-4C are detailed rear views of a first embodiment of the safety system applied to the guide antenna of a drilling machine, in which said safety system is shown in different drilling configurations, respectively with the guide antenna vertical (Figure 4A), with the guide antenna inclined laterally relative to the plane X-Z for drilling to the right (Figure 4B) and with the guide antenna inclined laterally relative to the X-Z plane for drilling to the left (Figure 4C);

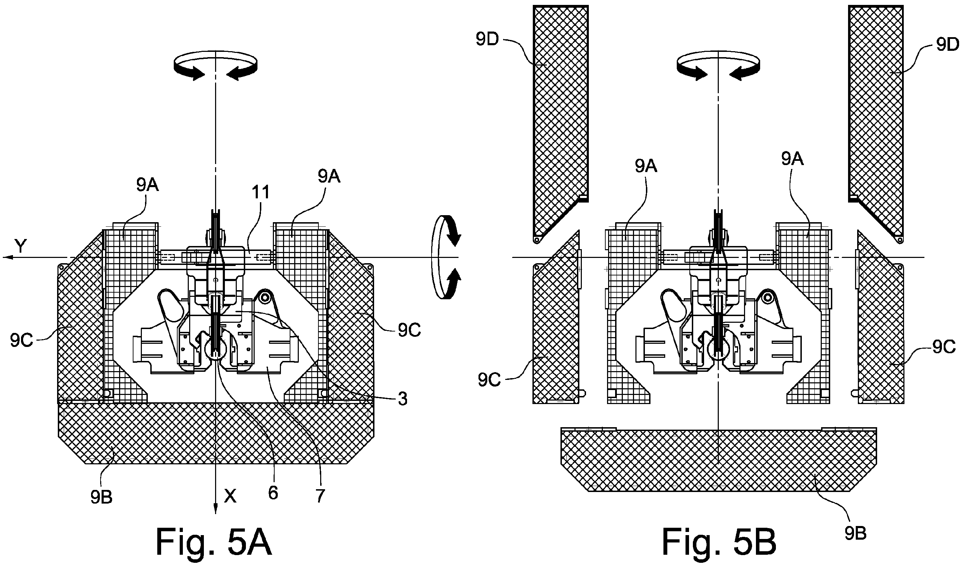

Figures 5A and 5B show a first preferable embodiment of the safety system according to the present invention, constructed as a sensitive platform with composable and modular structure shown respectively in assembled condition, for substantially vertical drilling (Figure 5A), and in exploded view, with additional applicable platform modules (Figure 5B);

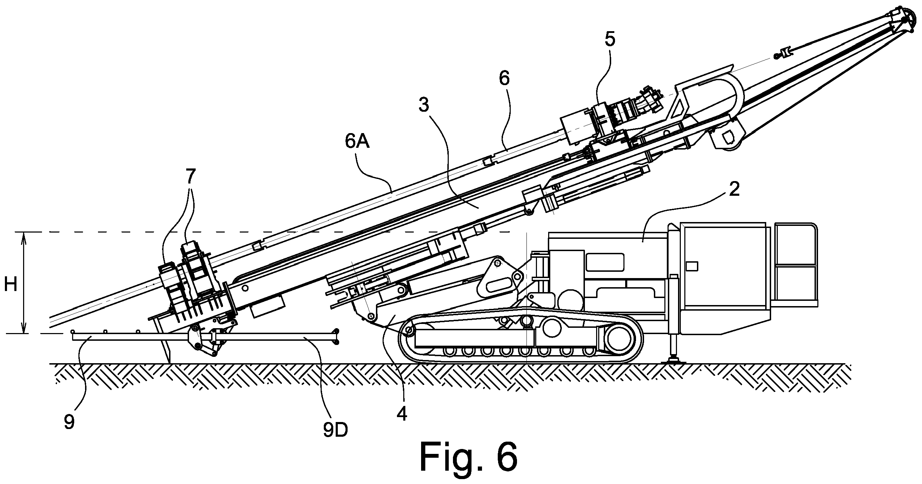

Figure 6 is a side view of a drilling equipment provided with a safety system according to a first embodiment of the present invention, applied to the machine in a configuration for frontal anchoring or drilling with small inclinations relative to the ground. The mounting of additional platform elements, to cause the safety system to protect a larger dangerous area, is shown;

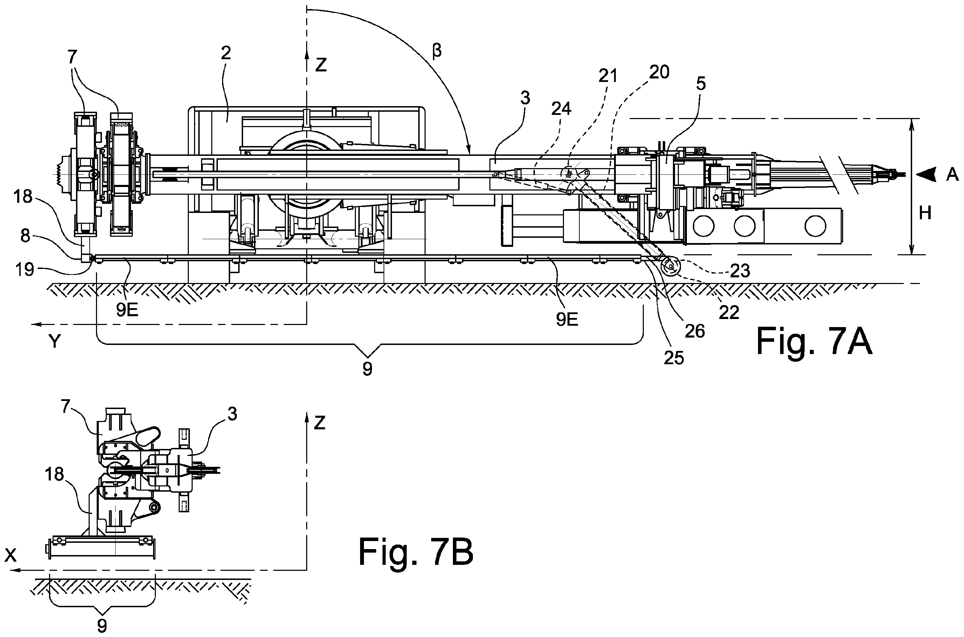

Figure 7A is a front view (on the Z-Y plane) of a drilling equipment provided with a safety system according to a second embodiment of the present invention, applied to the machine in a configuration for tie rods with transverse (or lateral) horizontal drilling and drilling means positioned in overhang frontally (sideways) relative to the guide antenna;
Figure 7B is a lateral view (viewed from side A with reference to the indication of Figure 7A) of the drilling equipment positioned as in Figure 7A. For additional clarity, the drilling machine and the relative kinematics of the guide antenna are not shown;

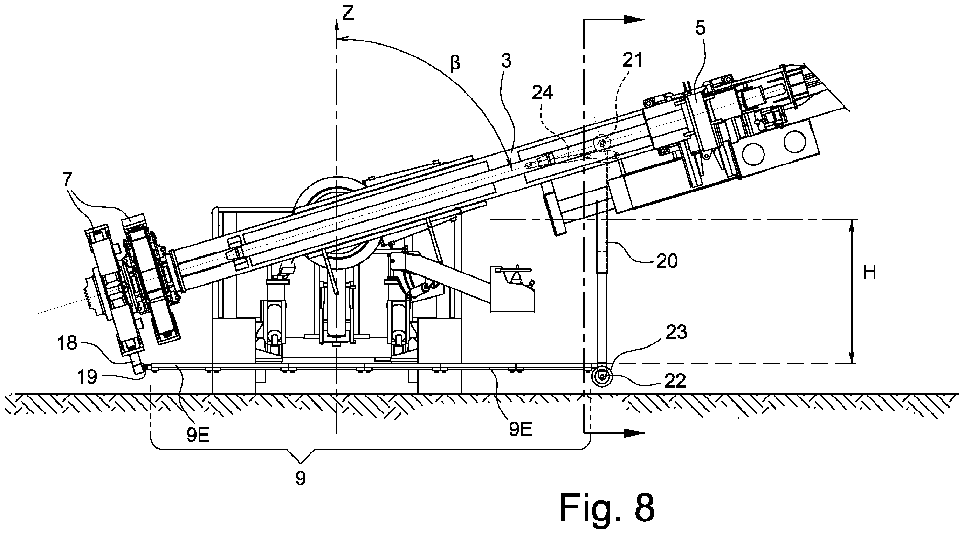

Figure 8 is a front view (on the Z-Y plane) of a drilling equipment provided with a safety system according to a second embodiment of the present invention, applied to the machine in a configuration for tie rods with transverse (or lateral) inclined drilling and drilling means positioned in overhang frontally (sideways) relative to the guide antenna;

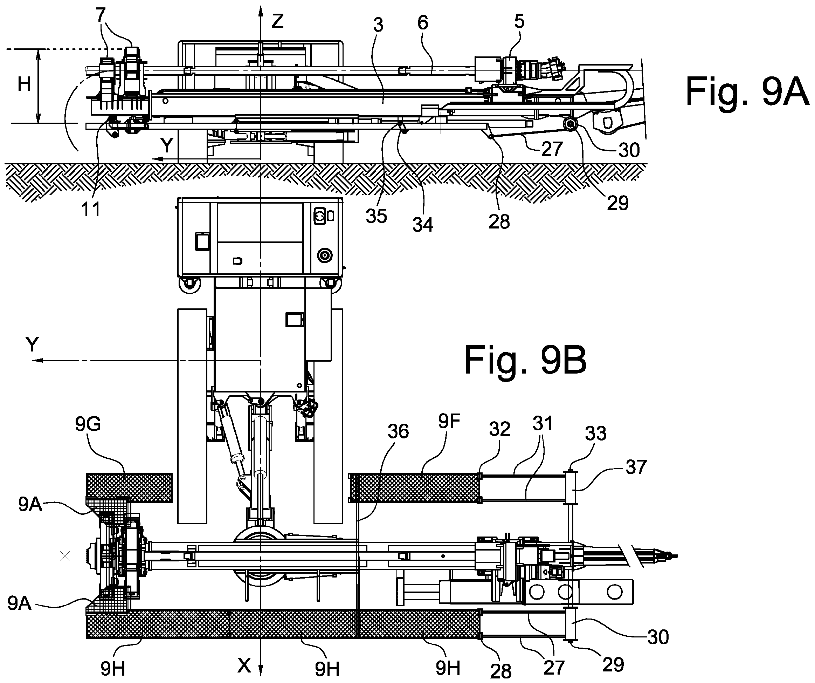

Figure 9A is a front view (on the Z-Y plane) of a drilling equipment provided with a safety system according to a second embodiment of the present invention, applied to the machine in a configuration for tie rods with transverse (or lateral) horizontal drilling and drilling means positioned above the guide antenna;
Figure 9B is a plan view (on the X-Y plane) of a drilling equipment in the same configuration as in Figure 9A; and

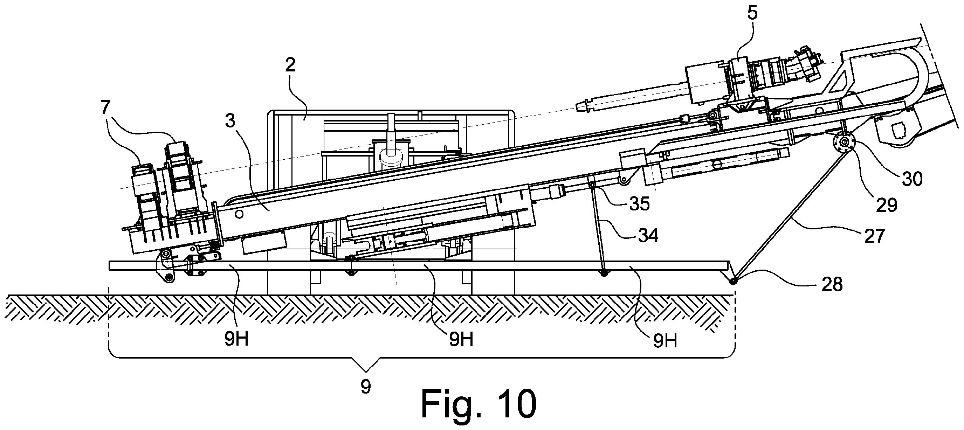

Figure 10 is a front view (on the Z-Y plane) of a drilling equipment provided with a safety system according to a second embodiment of the present invention, applied to the machine in a configuration for tie rods with transverse (or lateral) inclined drilling and drilling means positioned above the guide antenna;

With reference to Figure 1, the drilling or excavating machine, suitable for all drilling technologies, rotary, rotary percussion, vibration, driving and mixing and injection, indicated in its entirety with the reference number 1, substantially consists of a machine body 2, mounted on tracks or wheels that allow it to move in the construction site, of a guide antenna or mast 3, on which the drilling means slide, and of a kinematic mechanism 4 that allows the guide antenna 3 to move relative to the machine body 2 to bring it from a closed configuration, used for transport, to a working configuration, in which the guide antenna 3 can be in a vertical, inclined or horizontal position. In general, the machine 1 can be of the type for making piles, micropiles, tie rods, mechanical mixing or water wells.

On the guide antenna 3 is mounted at least one rotating head or table 5, also called rotary head, which imparts torque to a drill stem 6 and can slide along the guide antenna 3 to cause the tool to advance or retreat in the borehole. Alternatively, a drilling system can be mounted that uses percussion in addition to rotation and vibration in addition to rotation.

The rotary head 5 can be mounted slidably in the transverse sense (in a direction perpendicular to the plane X-Z of the side view) both relative to the trolley that guides it, and relative to the guide antenna 3. In the longitudinal direction the trolley is integral with the rotary head 5, so in turn it is able to slide on the guide antenna 3 along a drill axis coinciding with the axis of the drill shafts 6A which, in the case of Figure 1, coincides with the axis Z. By convention, a reference system is defined in which the ideal axis X is parallel to the longitudinal (forward-backward) direction of the machine 1, the axis Z indicates the vertical direction, or however perpendicular to the ground or floor on which the machine 1 lies, and the axis Y is parallel to the transverse direction (right flank-left flank) of the machine 1.

When the drill or treatment depth to be reached exceeds the stroke of the rotary head 5, it is necessary to use drill stems 6 comprising a plurality of segments or shafts 6A which must be added during drilling. At the end of the first stroke of the rotary head 5, it is necessary to disconnect said rotary head 5 from the last shaft 6A driven and to raise it, in order to add new shafts 6A that are screwed above the ones that have already been driven. To allow this operation, at the base of the guide antenna 3 are present clamps 7, in particular at least one pair of clamps 7, that make it possible to hold the drill stem 6 already driven and to disconnect the rotary head 5 or a shaft 6A by unscrewing it from the drill stem itself 6. The clamps 7 can comprise a pair of clamps 7 or, equivalently, a clamp 7 and an unscrewing device. The added shaft 6A is then connected to the drill stem 6 at a height above the clamps 7. In the case of double head drilling (with two rotary heads 5), both the drill shafts 6A are used (internally), and casing pipes (externally to the shafts) and these pipes may require the application of three clamps 7, at least one of which is an unscrewing device. At the end of the drilling, the aforesaid operations must be carried out in reverse order to extract the drill stem 6, unloading the shafts 6A in sequence. The phases of loading and unloading the shafts 6A can require the intervention of an operator who correctly positions said shafts 6A and hence who must move in proximity to the drill axis. Operations to maintain, inspect and replace the tool can also require the operator to move into this area. The area in proximity to the guide antenna 3 and to the drill stem 6 is deemed dangerous, because the operator could come into contact with the rotating members of the machine 1 and consequently may become entangled in them and be dragged. Another danger can consist of the movement of the rotary head 5 along the guide antenna 3, which could hit or drag the operator.

To prevent the operator or other site personnel from being exposed to dangers during the aforesaid phases, the safety system of the present invention comprises a sensitive platform 9 provided with connecting and regulating means that allow said platform 9 to be associated with the machine 1 and, in particular, said platform 9 to be operatively connected to the guide antenna 3 to maintain it substantially parallel to the ground and raise it to a predefined height, preferably minimal, from the ground on which the machine 1 lies. The platform 9 is provided with a hole or a passage at the drill axis to allow the drill stem 6 to pass through the platform 9 itself. Alternatively, the platform 9 can be holed in such a way as to include the clamps 7 at least partially and to develop around them, allowing the clamps to pass through the platform 9 itself, at least in some working configurations.

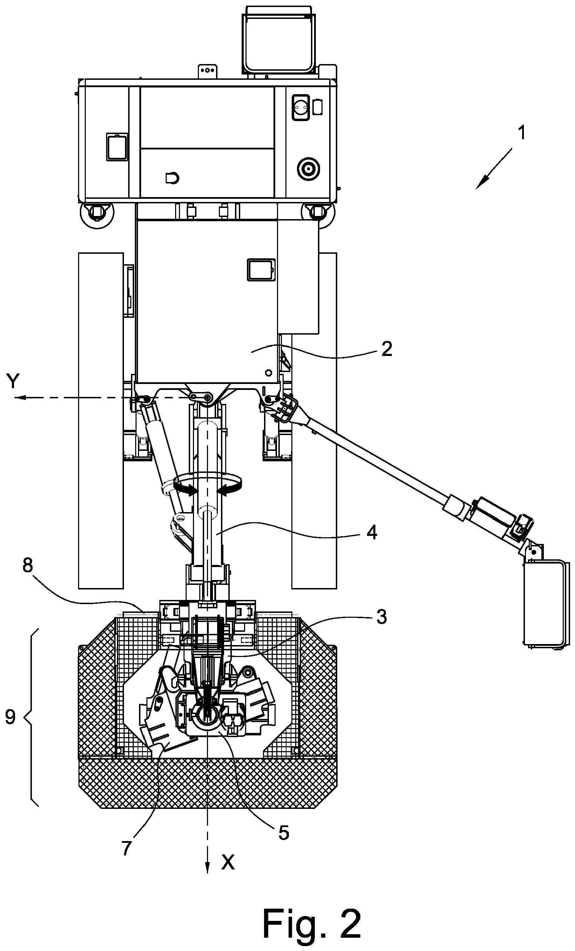

With reference to figure 2, it can be noted that the platform 9 extends parallel to the horizontal plane X-Y to at least partially, but preferably completely, cover the dangerous area, defined as the entire area within which workers could come into contact with the rotating parts of the machine 1 used for drilling. The sensitive platform 9 will preferably have substantially circular or polygonal shape, with an approximate central area positioned on the axis of rotation of the drill stem 6. The platform 9 has such lateral development distance, relative to the axis of rotation, that a person positioned outside the platform 9 itself cannot reach the movable parts of the machine 1 involved in the drilling (in particular the drilling shafts 6A or the movable parts of the rotary heads 5), even extending an arm and/or leaning towards the drill axis. In this way, any person will be forced to step onto the platform 9 in order to access the drilling shaft 6A.

The safety system of the present invention further comprises one or more sensitive devices 8 operatively connected with the platform 9, configured to detect the presence of one or more persons on the platform 9 and thus inside or in proximity to the dangerous area. In this condition the safety system sends an appropriate control signal to the machine 1. For example, if the sensitive devices 8 consist of pressure, force or displacement sensors, when one or more persons step onto the sensitive platform 9, by effect of their weight they cause the triggering or excitation of said sensitive devices 8, which in particular detect changes in the force acting on a reference point (detection or measurement point) or a pressure over a reference area (detection or measurement area). The sensitive devices 8 are calibrated in such a way that triggering only takes place when the weight detected on the platform 9 exceeds a predefined threshold value, compatible with the weight of a person (or of part of a person, e.g. in the order of tens of kilograms). The generated signal immediately controls all dangerous maneuvers to stop, in particular at least the rotation of the drill stem 6, in order to preserve the safety of the operators, and in some cases also the axial sliding of the rotary head 5 to stop, along with the other maneuvers preceding the drilling.

In a variant, the sensitive device 8 cannot be regulated directly on a trigger value, but it is arranged to simply send a signal proportional to the total weight of the platform 9 and of any load present on the platform 9. The signal is then managed by a control unit 10 that is programmable, generally fastened on the machine 1 and associated with its control systems in such a way as to be able to block dangerous maneuvers when the signal received exceeds a predefined threshold value, or when a combined event occurs. Such a combined event can coincide, for example, with a change in the weight of the platform 9 detected by first sensitive devices 8 and with the detection in height of a presence of a body, detected with second sensitive devices 8 for example of the optical, laser or the like. In this case, the two data are associated and the control unit 10 acts to protect any worker who stepped onto the platform 9.

The sensitive devices 8 can measure at least one among the following quantities: force, displacement, elongation and pressure. In this case, the sensitive devices 8 can consist of loading cells, pressure switches, dynamometers or micro-switches able to directly or indirectly measure the load present on the sensitive platform 9. The control signal, generated consequently to the triggering of the sensitive device 8, can act directly on the actuators of the rotary head 5 in order to immediately stop at least the rotation of the drill stem 6 or, alternatively, to simultaneously block both the rotation of the shafts 6A, and the axial sliding of the rotary head 5 along the guide antenna 3.

In a variant, the control signal generated by the triggering of the sensitive devices 8 can be sent to an electronic unit or programmable logic controller (PLC) 10 which, in addition to commanding at least the rotation of the drill stem 6 to stop, can manage a plurality of additional safety functions, such as the blocking of the sliding of the rotary head 5 and the emission of a sound or light signal that warns that the dangerous area has been breached. Once the sensitive devices 8 are activated, it will be possible to reactivate the rotation of the shafts 6A with the normal starting procedure if one desires to continue drilling. Such procedure requires that the sensitive devices 8 are no longer triggered (and hence there are no persons on the platform 9) and that their restoration has been carried out, the normal operating mode of the machine 1 has been selected by means of a dedicated selector and the start command has been activated. If instead one desires to feed or disassemble the drilling shafts 6A while the sensitive devices 8 are triggered, the limited operating mode will be enabled through an appropriate dedicated mode selector. In this limited operating mode, all maneuvers of the machine 1 are appropriately slowed down to such values as to eliminate the danger and allow the inspection of the parts or the execution of the manual operations. To get out of the limited operating mode and to return once again to the normal operating mode, i.e. the working mode, the sensitive devices 8 must no longer be triggered and their restoration must have been carried out, the normal operating mode of the machine 1 must have been selected by means of a dedicated selector and the start command must have been activated.

If the sensitive devices 8 are transducers, e.g. loading cells, pressure switches or dynamometers able to generate proportional output signals, a minimum threshold value of said signal, corresponding to the effect of only the own weight of the platform 9, is set in the programmable logic controller 10. The presence of a person on the platform 9 will be detected on the basis of a change in the signal relative to this minimum threshold corresponding only to the own weight of the platform 9. The minimum threshold and the triggering threshold of the sensitive devices 8 can be set only by means of setting password-protected procedures, performed by authorized personnel.

During normal use of the machine 1, it is possible that the sensitive devices 8 may detect, on the platform 9, weights lower than the triggering weight, but higher than the own weight of the platform 9 itself. Such weight increases can be caused, e.g., by the accumulation of debris or drill cuttings on the platform 9. Hence, it is advantageous, especially in the presence of a programmable logic controller 10, also to impose a first warning threshold for the excessive accumulation of material on the platform 9. In particular, said warning threshold, without blocking the machine 1, will warn the operator of the need to clear the accumulated debris from the platform 9. The warning threshold for an excessive accumulation of material will be set to a sufficiently low value. e.g. 5 or 10 kilograms, in any case far lower than the triggering threshold for the presence of a person on the platform 9. Once the warning threshold for excessive accumulation is reached, the safety system may, for example, activate appropriate light or sound signals.

The accumulation of material may also be detected by sensors sensitive to the identification of objects or bodies, such as optical or laser sensors, or the like. Being mounted in series in height along the guide antenna 3, these sensors could determine which height the objects or debris reach. If the height is low, or however lower than the minimum height of a person, the system recognizes that these objects or debris are drill cuttings. In this case it may be sufficient to generate an accumulation warning. Vice versa, if the height exceeds a few tens of centimeters the system can associate this information with the fact that a human body is present on the platform 9 and hence signal its presence, sending this danger indication or intervening directly to block dangerous maneuvers.

With reference to Figure 2, it can be noted that, to prevent the accumulation of drill debris on the platform 9, the stepping plane of the platform 9 is preferably constructed by means of grids, with suitably wide mesh and compatible with having foot-rest down on them, which allow any liquids or debris, projected from the drilling area, to flow through towards the ground. The platform 9, mounted at a certain height off the ground, in addition to allow measuring the sensitive feature, also allows the drill cuttings to evacuate downwards through the holes of the grid. It is also possible to apply in proximity to the platform 9 one or more removable and adjustable deflectors, positioned at a greater height than the platform 9 and constrained to the guide antenna 3, or to the clamps 7, or to the platform 9 itself. The deflectors will have a surface that is inclined and sloping towards the periphery or outside of the platform 9. The debris or the fluids, that are projected upwards and laterally during the drilling step, will tend to fall onto said deflectors and will be deviated in such a way that for the most part they will fall outside the platform 9 without accumulating thereon. The raised position of the platform 9 also makes it possible to easily clean the underlying area when an accumulation of material occurs in proximity to the drilled hole.

Figures 3A, 3B and 4C show in detail a preferable solution of the safety system, comprising connecting and regulating means to make the sensitive platform 9 operatively connected or integral with the guide antenna 3. Especially in machines for the construction of micropiles, the kinematic mechanism 4 of the machine 1 makes it possible to incline the guide antenna 3 by an angle α relative to the vertical in the frontal or rear direction (rotating on the X-Z plane) to carry out inclined drillings. The first embodiment of the safety system shown in Figures 3A, 3B and 3C allows the platform 9 to be fastened to the guide antenna 3 to control at least a first relative rotation between the platform 9 and the guide antenna 3 through orientable connecting and regulating means, in such a way as to maintain the platform 9 substantially horizontal as the inclination of the guide antenna 3 changes. In particular, the platform 9 is orientable relative to the machine 1 and, in this case, relative to the guide antenna 3 to assume a desired access configuration. This configuration for the access of personnel can preferably be horizontal, or oriented parallel to the ground or to the bearing plane of the machine 1 (e.g. when the plane is not horizontal to prevent the height differences of the platform 9 relative to the ground in some of its access extremities from becoming too great), or else parallel to the guide antenna 3, e.g. in cases of horizontal drilling. The safety system of the present invention thus enables the operator who has to enter and access the dangerous area, to add or remove shafts 6A or to carry out maintenance operations, to work walking on a plane that is substantially horizontal, or slightly inclined, or in steps (if the machine 1 bears on a highly steep slope) consisting of the sensitive platform 9, even when the guide antenna 3 is inclined frontally or backwards. In these configurations, with the guide antenna 3 inclined, the system continues to perform its safety function, remaining able to detect the presence of a person on the platform 9.

In particular, Figure 3A shows the condition in which the guide antenna 3 is substantially vertical (parallel to the axis Z) and the platform 9 is substantially horizontal (parallel to the plane X-Y). While operating, the lower base of the guide antenna 3 is generally set down on the ground and it can be provided with a dedicated base plate. The platform 9 comprises connecting or regulating means so that it can be operatively connected or, in this specific case, made integral with the guide antenna 3 and positioned at a height that is slightly above the lower base of the guide antenna 3 itself. In this way, even the platform 9 is generally at a very low height relative to the ground (e.g. 20-30 cm, up to, for example, 70 cm) and, consequently, the operator can easily step onto and off the platform 9. Greater heights than those indicated are possible, but they entail the installation of an access ladder and, in some cases, they could require the installation of railings for protection against falls, which complicate the preferable embodiment described herein, but which are however feasible. In a preferred embodiment, the platform 9 comprises means for connection to the guide antenna 3 comprising a support framework 12 constrained to the base of the guide antenna 3. The connection between the platform 9 and the support framework 12 takes place through a first hinge or pivot 11 that has an axis of rotation perpendicular to the longitudinal axis of the guide antenna 3 and is oriented parallel to the axis Y when the guide antenna 3 lies on the plane Z-X, as shown in Figures 3A, 3B and 3C. The connection between the support framework 12 and the guide antenna 3 can be of the detachable type, by means of bolting, or of the fixed type, by means of welding.

The platform 9 can be positioned approximately at the same height as the lower clamp 7 and, for this reason, it has a free central passage with such size and shape as to allow the clamp 7 to pass through the platform 9 (as shown also in Figure 2). The orientable connecting and regulating means of the platform 9 comprise a first linear actuator 13 and a linkage 14, both hinged to the support framework 12, through which the platform 9 is held in position. The linkage 14 acts on the platform 9 through a second hinge or pivot 15 that has an axis of rotation parallel to that of the first hinge 11. The own weight of the platform 9 and any loads present on the platform 9 generate two equal and opposite forces on the hinges 11 and 15.

In a first preferable solution, the sensitive devices 8 consist of loading cells, in the form of a pin provided with instruments, which are inserted indifferently either into the first hinge 11 for the rotation of the platform 9, or into the second hinge 15, or into both if one wants to have two values to be mutually compared. The loading cells 8 are able to measure the reaction force generated on the first hinge 11 and thus to evaluate the weight present on the platform 9. When the weight exceeds a predefined threshold value, compatible with the weight of a person or of part of a person, the sensitive devices 8 are triggered, generating the control signal. In other variants, the regulating means of the platform comprise a first linear actuator 13 which consists of a hydraulic cylinder or jack, whilst a pressure sensor measures the pressure that keeps the platform 9 balanced. The pressure necessary to balance only the own weight of the platform 9 is taken as a reference to calibrate the system ("zero" condition). Every subsequent load change on the platform 9 is detected by the pressure sensor because it causes a change in the working pressure of the first actuator 13. The first actuator 13 can also be manual and adjustable, e.g. extending by means of female-screw, rack and pinion, crank mechanism, etc.

Figure 3B shows an operating step in which the guide antenna 3 is inclined frontally by an angle α (in the positive direction) and the platform 9, which is connected to the guide antenna 3 by its own connecting and regulating means, is oriented in the substantially horizontal direction by appropriate operation of said connecting and regulating means, i.e. of the first actuator 13 and of the linkage 14.

Figure 3C shows an operating step in which the guide antenna 3 is inclined backwards by an angle α (in the negative direction) and the platform 9 is oriented in the substantially horizontal direction by appropriate operation of the first actuator 13 and of the linkage 14.

Figure 3D shows an operating step in which the guide antenna 3 is inclined frontally by an angle α by 90°, i.e. it is substantially horizontal, and also the platform 9 is oriented in substantially horizontal direction by appropriate operation of the first actuator 13 and of the linkage 14. The capability of reaching this mutual position between the guide antenna 3 and the platform 9 is advantageous when transporting the machine 1. In fact, during the transport operations, the guide antenna 3 is positioned horizontal above the machine body 2 and by orienting the platform 9 in the horizontal position it is possible to keep the platform 9 mounted without increasing the height of the machine 1.

The presence of a linkage 14 makes it possible to increase the inclinations achievable by the platform 9 and, thereby, to offset the inclinations of the guide antenna 3 even starting from a posterior inclination with negative angle α, e.g. 20°-30°, until reaching a front inclination with positive angle α of 90°, i.e. with the guide antenna 3 horizontal and positioned above the machine body 2. If the range of inclinations reachable by the guide antenna 3 is smaller, it is possible to use simpler connecting and regulating systems to actuate the platform 9, e.g. connecting the first actuator 13 directly to the platform 9 without the interposition of a linkage 14. Moreover, in the case of machines that only allow frontal inclinations, of limited amplitude, of the guide antenna 3, a solution in which the support framework 12 is not present is also possible. In this case the hinge 11 of rotation of the platform 9 is built directly on the guide antenna 3 and the actuator 13 will have an extremity constrained to the guide antenna 3 and the other extremity constrained to the platform 9. Alternatively to the transmission linkage 14 it is possible to use, as connecting means of the platform 9, several pin attachments with variable fastening positions of the first actuator 13. For example, after fully extending the first actuator 13, the platform 9 is made temporarily integral with the guide antenna 3 with a fastening means (pin, screw, block, etc.) and the first actuator 13 can be detached and fastened in another point of the guide antenna 3, thus allowing further extension of the opening movement, as the following step. By carrying out a series of successive steps in sequence, it is possible to cover all the inclinations of the guide antenna 3.

To detect the load on the platform 9 it is also possible, alternatively to the loading cells, to use other types of sensitive devices 8, e.g. pressure switches, microswitches, linear or rotary encoders, etc. The actuation of the first actuator 13 for regulating and inclining the platform 9 can be managed independently by the operator or it can preferably be automated to maintain the platform 9 positioned horizontally. In case of an automated system, additional control sensors will have to be installed, e.g. inclinometers able to sense the orientation of the platform 9 and to send a signal to the control unit 10, which will accordingly control the movement of the first actuator 13 in order to appropriately incline the platform 9.

The possibility of inclining the platform 9 relative to the guide antenna 3 can be advantageously used when cleaning the drilling area. Maintaining the guide antenna 3 substantially vertical, it is possible, for example, to incline the platform 9 upwards, moving it yet farther away from the ground. In this way, it will be easier to access the area in proximity to the mouth of the borehole in the ground to remove, using a cleaning tool, the debris accumulated under the platform 9.

Sometimes the kinematic mechanism 4 of the drilling machines is very simple and it has only one hinge oriented with axis Y. In this case, the guide antenna 3 is very close to the framework of the machine 1. Consequently, for these machines the platform 9 associated with the machine 1 could comprise connecting and regulating means to be constrained to the guide antenna 3 rotatably around the axis Y and the rotation of the platform 9 would be limited by a mechanical fastening means appropriately positioned on the (fixed) framework of the machine 1, in such a way that the platform 9 itself is always horizontal or has a desired orientation. Alternatively, the platform 9 could comprise connecting and regulating means to be constrained directly to the framework of the machine 1, at a predefined height raised from the ground, and in this case the platform 9 itself could be advantageously fixed or orientable only with small angles (e.g. to make up for any inclinations of the ground or reference plane).

In an alternative solution, to allow the platform 9 to rotate relative to the first hinge 11 and to the guide antenna 3, the platform 9 can comprise regulating means consisting of rotary actuators 13, e.g. mounted directly on the axis of the first hinge 11 or meshing with gears fixed on the axis of the first hinge 11. In this case the sensitive devices 8 could consist of pressure switches or of pressure transducers able to measure the pressure of the rotary actuator 13 that is induced by the load present on the platform 9.

In a further solution, the platform 9 could be hinged to the guide antenna 3 through the first hinge 11 and comprise regulating means such as flexible elements or telescopic elements that connect the platform 9 to the guide antenna 3 (drawbridge configuration) to regulate the inclination of the platform 9 itself. In this way, by varying the length of the flexible elements, consisting for example of ropes or chains that can be wound on a drum, or of the telescopic elements, consisting for example of hydraulic cylinders, it would be possible to vary the inclination of the platform 9 in the frontal direction relative to the guide antenna 3. In this case the sensitive devices 8 could consist of loading cells or dynamometers fastened to an extremity of the flexible or telescopic elements, in order to measure the pull induced on these elements by the load present on the platform 9.

In the case of drilling machines that allow only small inclination angles of the guide antenna 3, e.g. 5°, a simpler, non-actuated form of regulation of the orientation of the platform 9 is possible. The platform 9 can be rotated manually around the first hinge 11, while the second hinge 15 of the platform 9 slides within a slot obtained on the support framework 12 or on the guide antenna 3. In this way it is successively possible to block the second hinge 15 with friction mechanical stops when the platform 9 has reached the horizontal orientation.

If the drilling machine 1 is also capable of work configurations with lateral inclinations of the guide antenna 3, or with the guide antenna 3 rotated on the Y-Z plane by an angle β relative to the vertical, the safety system of the invention advantageously provides for the possibility of offsetting these inclinations as well, maintaining the platform 9 substantially horizontal.

Figures 4A, 4B e 4C are rear views of the guide antenna 3, i.e. they are obtained observing the guide antenna 3 from the kinematic mechanism 4 towards the drill stem 6. For greater clarity, the clamps 7 fastened at the base of the guide antenna 3 have also been hidden. The safety system of the present invention enables the operator who has to enter into the dangerous area, to add or remove shafts 6A or to carry out maintenance operations, to work walking on a substantially horizontal plane, consisting of the sensitive platform 9, even when the guide antenna 3 is inclined laterally by an angle β to the right or to the left. In particular, in these configurations the system continues to perform its safety function, still being able to detect the presence of a person on the platform 9.

Figure 4A shows the condition in which the guide antenna 3 is substantially vertical and the platform 9 is substantially horizontal. In this preferable embodiment, the platform 9 still comprises connecting means such as the support framework 12, hinged to the platform 9 by means of a first hinge 11 that enables the frontal inclinations of the platform 9, as previously mentioned with reference to Figures 3A, 3B and 3C. The support framework 12 in turn is hinged to the guide antenna 3 by orientable connecting means such as a hinge or pin 16 that allows the lateral inclinations of the support framework 12 and of the platform 9 relative to the guide antenna 3. This hinge 16 has an axis of rotation perpendicular to the axis of the first hinge 11 and both the hinges 11 and 16 belong to the support framework 12, and thus to the platform 9, whereby maintaining a constant mutual position. The lateral inclination of the platform 9 is imposed and maintained by the orientable connecting and regulating means with which it is provided, e.g. an additional actuator 17 of the linear type that can have an extremity hinged to the guide antenna 3 and the other extremity hinged to the support framework 12. The activation of the actuator 17 causes the rotation of the support framework 12 and, consequently, of the platform 9 relative to the guide antenna 3.

In this solution as well, the own weight of the platform 9 and any loads present on the platform 9 tend to make the platform 9 rotate around the first hinge 11, generating two equal and opposite forces on the hinges 11 and 15. It is therefore possible to keep on using a loading cell 8 mounted as a pin on the first hinge 11 to detect the presence of a person on the platform 9. It is however possible to install, in addition, also a further loading cell or another additional sensitive device 8 on the hinge 16 or on the actuator 17.

Figure 4B shows the condition in which the guide antenna 3 is inclined relative to the vertical by a positive angle β to perform rightward inclined drillings and the platform 9 is maintained substantially horizontal.

Figure 4C shows the condition in which the guide antenna 3 is inclined relative to the vertical by a negative angle β to perform leftward inclined drillings and the platform 9 is maintained substantially horizontal.

In the same way already described for the frontal inclination, the actuation of the cylinder 17 for the lateral inclination of the platform 9 can be managed independently by the operator or it can preferably be automated to maintain the platform 9 horizontal. In case of an automated system, control sensors will have to be installed, e.g. inclinometers, able to sense the orientation of the platform 9 and to send a signal to the control unit 10, which will accordingly control the movement of the actuator 17 in order to appropriately incline the platform 9.

In an alternative solution, the lateral rotation of the platform 9 relative to the hinge 16 and to the guide antenna 3 can be controlled by one or more rotary actuators 17, e.g. mounted on the axis of the hinge 16 or meshing with such hinge 16. In this case the sensitive devices 8 could consist of pressure switches able to measure the pressure of the rotary actuator 17 that is induced by the load present on the platform 9.

In drilling machines that allow large inclinations of the guide antenna 3 the platform 9 must allow the clamps 3 to incline integrally with the guide antenna 3 without interfering with the platform 9 itself. Figure 5A shows a possible shape of the platform 9, provided with a sufficiently wide central passage to allow all inclinations of the clamps 7 without interference. Figure 5A shows a top view of the platform 9 integral with the guide antenna 3, which in the specific case is in the vertical position. During all the movements of the guide antenna 3 relative to the machine body 2, e.g. the change of the work radius through the inclination of the arm of the kinematic mechanism 4, or the lateral displacement of the guide antenna 3 by the swiveling of the arm of the kinematic mechanism 4, or else the raising of the guide antenna 3 through the axial sliding of the guide antenna 3 itself relative to the kinematic mechanism 4, the platform 9 will move integrally with the guide antenna.

In sites with large maneuvering spaces, the platform 9 can fully extend around the drilling area, as shown in Figure 2. In this case the platform 9 can also be monolithic and have lateral size that is preferably no greater than that of the drilling machine 1, so that it can remain mounted on the machine 1 even during transport. When the drilling machine 1 must work in restricted spaces, or must carry out operations flush with the wall, or else is provided with additional articulations, the sizes of the platform 9 could limit the operating capabilities or the movements of the machine 1. In these cases it is advantageous to use a platform 9 with composable and modular structure like the one shown in Figures 5A and 5B. The platform 9 can comprise at least one load-bearing central element 9A, which always remains constrained to the guide antenna 3 directly or through a support framework 12. Preferably the load-bearing central element 9A has sufficient minimum dimensions to extend laterally relative to the clamps 7 and reach at least the front edge of the clamps 7. To this load-bearing central element 9A can be connected one or more lateral platform elements 9C and one or more frontal platform elements 9B, movable and/or removable with respect to the load-bearing central element 9A. The connection can be of the hinge type, so that the frontal and lateral elements 9B and 9C can be overturned or rotated by 90° relative to the load-bearing central element 9A, assuming a vertical position to reduce their frontal or lateral size. Alternatively, the connection can be press-fit or bolted.

When "wall front" work operations must be carried out, i.e. in proximity to a wall positioned frontally to the clamps 7, the frontal element 9B of the platform 9 can be disassembled to allow the drill stem 6 to approach the wall as closely as possible. Alternatively, the frontal element 9B can be rotated by 90° around the hinges oriented with the axis of rotation parallel to the axis Y in Figure 5A, which connect it to the load-bearing central element 9A, and it can be positioned vertically to reduce its frontal size. In these conditions the area in front of the guide antenna 3 and of the drill stem 6 will not be accessible to the operators, because of the presence of a wall. The only possible access route to the dangerous area will be the route coming from the lateral areas relative to the guide antenna 3. However, in these lateral areas the presence of a person is detected by the lateral platforms 9C, which trigger the sensitive devices 8, installed in such a number as to cover all the different modular compositions which the platform 9 can assume. Thus in this operative condition, although the frontal element 9B has been removed, the safety system ensures that the presence of a person in the dangerous area will be detected. Once the new configuration is obtained, the "zero" condition will be determined, i.e. the measurement of the sensor 8 that detects weight and/or pressure and/or displacement will become the new reference value on which the safety system will evaluate changes (increases in the measurement correspond to greater weight on the platform 9, hence to the start of danger due to the presence of a worker on the platform 9).

When work is to be performed in proximity to a wall positioned laterally relative to the clamps 7, e.g. with the tracks of the machine 1 aligned with the wall and with the kinematic mechanism 4 swiveled towards the wall, the lateral element 9C of the platform 9 can be disassembled to make it possible to approach the wall with the drill stem 6 as closely as possible. Alternatively, the lateral element 9C can be rotated by 90° around the hinges that connect it to the load-bearing central element 9A and positioned vertically to reduce its lateral size. In these conditions the area on a side of the guide antenna 3 and of the drill stem 6 will be inaccessible by the operators, because of the presence of a wall. In the remaining possible access areas, i.e. on the side opposite the wall and in the area in front of the guide antenna 3, the presence of a person is detected by the lateral platform 9C, or by the frontal platform 9B, which trigger the sensitive devices 8. When folded, the lateral platform 9C and frontal platform 9B also serve as guards and railings.

Figure 6 shows the drilling machine 1 working with large frontal inclinations relative to the vertical, i.e. with high α angles and the guide antenna 3 that tends to be positioned nearly horizontally and at low height. Under these operative conditions, it occurs that a long segment of the drill stem 6 is at a lower height than a height H that defines the height limit of the dangerous area. Said height H defines the height, relative to the ground, up to which it is necessary to avoid a possible contact between a person and the drilling members. The height H, which can reach up to 2.5 meters, is thus the height up to which a person with his feet on the ground risks dangerous contacts with the moving drilling members. The movable parts of the machine 1 involved in the drilling steps but located at a height above the height H do not need protections. To prevent operators from coming in contact with the rotating parts up to the height H, the sensitive platform 9 must extend throughout the length of the vertical projection of the segment of shafts 6A for which the operator, after stepping onto the platform 9, is below the height H. Hence, the protection height from the ground is given by the height H plus the height of the platform 9 from the ground.

In the embodiment of the safety system shown in Figure 6, the platform 9 can be further expanded by adding other additional platform elements 9D (also visible in Figure 5B) which are integrally fastened to the platform 9 and extend towards the machine body 2, or posteriorly to the guide antenna. To reach the drill stem 6 at a height below the height H, the operator will have to step onto one of the elements 9A, 9B, 9C and/or 9D of the platform 9 and, in this case, the sensitive devices 8 will be triggered with the consequent transmission of the stop signal. In the embodiment of the safety system shown in Figure 6, if the operator steps onto the additional platform element 9D his weight will tend to cause the platform 9 to rotate relative to the first hinge 11, generating two reactions on the hinges 11 and 15. The reaction on the first hinge 11 is detected by a sensor 8 sensitive to the change in force and/or weight and/or displacement, in particular for example a loading cell as already explained in relation to Figure 3A. In a possible variant, the additional platform element 9D could have appropriately shaped attachment points so that, once it is fastened to the platform 9, the additional platform element 9D has a raised stepping plane relative to the load-bearing central element 9A.

If the presence of the tracks of the machine 1 hinders the development of the platform 9, the platform can be constructed in steps and, in the track area, it can be positioned superiorly relative to the track itself.

Figure 7A shows the drilling machine 1 in an operative configuration for making horizontal tie rods with transverse or lateral drilling, and drilling means positioned in overhang frontally (sideways) relative to the guide antenna 3. The guide antenna 3 is rotated by an angle β equal to 90° relative to the vertical plane X-Z. This operative configuration is generally used to drill holes in a substantially vertical wall, placing the base of the guide antenna 3 close to or against that wall. With reference to Figure 7A, the entire area to the left of the clamps 7 is not reachable by a person, due to the presence of the wall that is being drilled. In this case, the entire drill stem 6 and the rotary head 5 as well are positioned below the height H and hence they are entirely included within the dangerous area. The drill stem 6 and the rotary head 5 would be reachable by a person positioned in front of the guide antenna 3, or from the side opposite the machine body 2 relative to the guide antenna 3. They would not be reachable, instead, by a person positioned behind the guide antenna 3, or at the same side of the machine body 2 relative to the guide antenna 3. From this latter position, the drill stem 6 and the rotary head 5 would be shielded by the height and depth size of the guide antenna 3.

To prevent a person from coming into contact with rotating or moving members involved in the drilling steps, the platform 9 must extend in overhang frontally to the guide antenna 3 for the entire segment that goes from the base of the guide antenna 3 to the rotary head 5. This configuration is more readily understandable in Figure 7B, which is a side view, i.e. a view on the plane Z-X, of the safety system applied to the machine 1 in the same condition as in Figure 7A. The platform 9 must extend in the frontal direction to the guide antenna 3, i.e. along the axis X, by a distance sufficient to prevent a person whose feet are on the ground from reaching the moving drilling means without stepping onto the platform 9. It is also possible to extend the length of the platform 9 in the direction Y, so that it continues in overhang relative to the clamps 7 and to the base of the guide antenna 3.

In the operative condition of Figures 7A and 7B, on the machine 1 is installed a platform 9 constructed according to a second embodiment. The platform 9 is still operatively connected to the guide antenna 3 and it is provided with connecting and regulating means to be able to be maintained suspended in two points or about two axes, defined by respective hinges 19 and 22, situated at the opposite ends of the platform 9. In greater detail, a first extremity of the platform 9 is connected in proximity to the base of the guide antenna 3 by a connecting means consisting of a first hinge 19. The first hinge 19 has an axis of rotation that is transverse relative to the longitudinal axis of the guide antenna 3 and, in particular in the configuration of Figure 7, it is oriented along the axis X. To maintain the platform 9 at a sufficiently low height relative to the ground, the first hinge 19 can be positioned on an arm 18 of the platform 9 that is connected to the guide antenna 3 or to a clamp 7. The second extremity of the platform 9 comprises other connecting and regulating means such as a second hinge 22 that will be at a sufficient distance from the base of the guide antenna 3 to cover the entire dangerous area. The second hinge 22 of the platform 9 is provided on an additional connection element 20 or tie rod with variable length, belonging to the platform 9 and in turn connected to the guide antenna 3 by a third hinge 21, preferably positioned in the upper segment of the guide antenna 3 and having an axis of rotation parallel to that of the first hinge 19. The third hinge 21 can advantageously be located on the rear surface of the guide antenna 3, i.e. the one opposite the guides of the rotary head 5, or on the lateral surfaces of the guide antenna 3, in such a way as not to interfere with the sliding of the rotary head 5 and of the drill stem 6 and in such a way as not to hinder the loading of the shafts 6A. The connecting and regulating element 20 with variable length can preferably consist of a telescopic arm able to extend and contract, as well as to change its own inclination relative to the guide antenna 3, in order to adapt to the different possible inclinations of the guide antenna 3 and to the different possible lengths of the platform 9. In this way, rotating the adjustable connection element 20 about the axis of the third hinge 21 and adjusting its length, it is possible to maintain the platform 9 positioned horizontally.

The platform 9, in this second embodiment of the safety system, can be composed by mutually connecting and fastening a plurality of additional platform elements 9D arranged side by side to each other, until reaching the necessary length on the basis of the inclination of the guide antenna 3. The safety system also comprises sensitive devices 8 able to detect the presence of a person on the platform 9 and, in this case, able to send a control signal to stop at least the rotation of the drill stem 6. The weight of a person located on the platform 9 generates vertical reactions on the hinges 19 and 22 of the platform 9 and on the hinge 21 of the adjustable connection element 20 and also generates a traction force on said connection element 20. It is thus possible to use different types of sensitive devices 8 (loading cells, pressure switches, dynamometers, strain gauges, etc.) positioned on the hinges 19, 21 and 22 and on the tie rod 20 subject to the effect of the weight of the person on the platform 9. For example, a pin 8 provided with instruments, provided with loading cell, can be inserted in the articulation of the first hinge 19. In the same way, alternatively or additionally, loading cells can also be inserted in the hinges 21 and 22.

In a possible variant, on the extremity of the tie rod 20 with variable length, at the axis of rotation of the second hinge 22, a winder device or winch 23 is mounted from which unwind connecting and regulating means of the platform 9 consisting of two tensioned ropes 25 and 26, mutually parallel and connected to the first hinge 19 positioned in proximity to the base of the guide antenna 3. The two ropes 25 and 26 can be tensioned by the rotation of the winch 23, or by the extension of the adjustable tie rod 20. Once the ropes 25 and 26 are tensioned and oriented horizontally, it is possible to lay upon them modular platform elements 9E fastened to the ropes 25 and 26 themselves, e.g. with clamps, to obtain a modular platform 9 of the desired length. The presence of a person on the platform 9 causes the variation of the tension of the ropes 25 and 26, which can be detected by the sensitive devices 8, e.g. dynamometers, interposed between the first hinge 19 and the lug of the ropes 25 and 26, or loading cells inserted in the hinges 19 and/or 22. The traction of the cables 25 and 26 also generates a torque on the winch 23 which tends to make it rotate on the axis of the second hinge 22. In this case it is also possible to monitor the pressure in the rotary actuator of the winch 23 by means of sensitive devices 8 (pressure switches) to detect the presence of a person on the platform 9. The ropes 25 and 26 can be adjusted to cause the platform 9 to assume an inclined configuration, or they can be slackened until the platform 9 itself bears on the ground.

Starting from the condition of Figure 7, as the lateral inclination β of the guide antenna 3 changes, as shown in Figure 8, the necessary length of the platform 9 to extend throughout the dangerous area changes. Therefore, as the inclination β changes, the length of the platform 9 can be adapted by adding or subtracting modular elements 9E to the platform 9. It is also necessary to change the length and the orientation of the tie rod 20 with variable length. If the tie rod 20 is embodied by a telescopic element, its length can be changed by means of a dedicated linear actuator, or a linear actuator can be used directly to embody the tie rod 20. By means of a second actuator 24, connected to the guide antenna 3 and to the tie rod 24, it is also possible to orient the tie rod 20 making it rotate about the third hinge 21. In this way the platform 9, being able to rotate in the two points of suspension defined by the hinges 19 and 22, is always maintained raised relative to the ground and oriented along a substantially horizontal plane even when the guide antenna 3 is inclined according to an angle β**.** The actuation of the actuators that regulate the length and the inclination of the tie rod 20 can be managed independently by the operator, or it can preferably be automated to maintain the platform 9 horizontal. In case of an automated system, additional sensors 8 will have to be installed, e.g. inclinometers able to sense the orientation of the platform 9 and to send a signal to the control unit 10, which will accordingly control the movement of the actuators.

In an embodiment variant, the connection element 20 with variable length can consist of an adjustable tie rod, by a chain or by another flexible element. In this case, along the guide antenna 3 there may be several points 21 of possible hinging of the tie rod 20, mutually spaced apart in the longitudinal direction of the guide antenna 3. In this way, for different inclinations β of the guide antenna 3, and thus for different lengths of the platform 9, the most appropriate hinging point 21 can be used, i.e. generally the closest one to the vertical line passing through the second hinge 22.

The arm 18 and the tie rod 20 can be fastened and oriented in mirror-like manner relative to the longitudinal centerline plane of the guide antenna 3. This makes it possible to install the safety system, comprising the platform 9, even when the guide antenna 3 is rotated laterally by an angle β in the opposite direction to the one described with reference to Figure 8.

In Figure 9A the drilling machine 1 is in an operative configuration for the execution of horizontal tie rods with transverse or lateral drilling, and drilling means positioned over the guide antenna 3. The guide antenna 3 is rotated by a 90° angle relative to the vertical plane X-Z. This operative configuration is generally used to drill holes in a substantially vertical wall, placing the base of the guide antenna 3 close to or against that wall. With reference to Figure 9A, the entire area to the left of the clamps 7 is not reachable by a person, due to the presence of the wall that is being drilled. In this case, the entire drill stem 6 and the rotary head 5 as well are positioned below the height H and hence they are entirely included within the dangerous area. With reference also to Figure 9B, it is noted that these parts would be reachable both by a person positioned at the side opposite the machine body 2 relative to the guide antenna 3, and by a person positioned at the side of the machine body 2 relative to the guide antenna 3. From this latter position, in the central segment of the guide antenna 3 the drill stem 6 and the rotary head 5 would be unreachable by an operator, because of the size of the machine body 2 and of its tracks. To prevent a person from coming into contact with rotating or moving members involved in the drilling steps, the platform 9 must extend in overhang parallel to the two flanks of the guide antenna 3 for the entire segment that goes from the base of the guide antenna 3 to the rotary head 5, with the exclusion of the intermediate segment, not accessible and thus not dangerous. Because of the presence of the tracks that would interfere with a single platform 9, which extends throughout the length of the guide antenna 3, it is advantageous for the platform 9 to be constructed in two distinct segments at the side of the machine body 2. Each segment of the platform 9 is still integral with the guide antenna 3 and it is maintained suspended in two points or about two axes situated at the opposite extremities of the segment itself.

The platform 9, as in the case already described with reference to Figure 3A, can comprise a load-bearing central element 9A, which always remains constrained to the base of the guide antenna 3 (i.e. in the area in proximity to the clamps 7) directly or through a support framework 12. The load-bearing central element 9A is hinged to the guide antenna 3 by a first hinge 11 and it can preferably be oriented by a linkage 14 and a first actuator 13. To the load-bearing central element 9A can be connected one or more modular lateral platform elements 9G, positioned on one side towards the machine body 2 so that these lateral platform elements 9G extend throughout the dangerous area until reaching in proximity to the track. The number and the length of the lateral platform elements 9G can be changed according to the configuration of the guide antenna 3. In the same way, to the load-bearing central element 9A can be connected one or more modular lateral platform elements 9H, positioned on the side opposite the machine body 2 so that these lateral platform elements 9H extend throughout the dangerous area until reaching in proximity to the rotary head 5. Because of the length of the overhang segment composed by these lateral platform elements 9H, the extremity of this segment that is far from the base of the guide antenna 3 is maintained suspended by at least one tie rod 27 with variable length. The adjustable tie rod 27 is constrained to a first hinge 28 on the platform 9 and to a second hinge or axis 29 on the guide antenna 3. Advantageously, the adjustable tie rod 27 can consist of one or more ropes gathered and tensioned by a winder device or winch 30 arranged with the axis of rotation matching the second hinge 29.

On the side of the guide antenna 3 oriented towards the machine body 2, in the section between the size of the machine body 2 and the position of the rotary head 5, are positioned additional modular elements of the platform 9, indicated with the reference 9F in Figure 9B, that are integral with the guide antenna 3 and extend over the dangerous area. The number and the length of the modular platform elements 9F can be changed according to the configuration of the guide antenna 3. The extremity of the modular platform elements 9F that is far from the base of the guide antenna 3 is maintained suspended by at least one tie rod 31 with variable length. The adjustable tie rod 31 is constrained to a first hinge 32 on the platform element 9F and to a second hinge or axis 33 on the guide antenna 3. Advantageously, the adjustable tie rod 31 can consist of one or more ropes gathered and tensioned by a winder device or winch 37 arranged with the axis of rotation matching the second hinge 33. The extremity of the platform elements 9F that is closer to the base of the guide antenna is maintained suspended by at least one tie rod 34 with variable length, constrained to the guide antenna 3 in a hinging point 35. The extremity of the platform elements 9F that is closer to the base of the guide antenna 3 can be maintained suspended also by a support element 36 connected to the lateral platform elements 9H positioned on the opposite side of the guide antenna 3. The inner part of the platform elements 9H and 9F, i.e. the one oriented towards the guide antenna 3, could be protected by a railing.

Also in the embodiment of the safety system shown in Figures 9A and 9B, the presence of a person on one of the modular platform elements 9A, 9F, 9G and 9H of the platform 9 can be detected by a plurality of sensitive devices 8, which are triggered by the effect of the weight of the person on the platform 9 and generate a control signal. These sensitive devices 8 can consist, for example, of loading cells or of pins provided with instruments applied in the hinges 11, 28, 29, 32 and 33. Equivalently, the sensitive devices 8 could consist of dynamometers or of other pull sensors applied to the adjustable tie rods 27, 31 and 34.

Figure 10 shows an operative condition of the machine 1 obtained starting from the condition of Figure 9A and rotating the guide antenna 3 on the plane Y-Z. As the inclination of the guide antenna 3 changes, the length of the platform 9 can be adapted by adding or subtracting modular platform elements 9H and 9F, to protect the entire dangerous area. In addition, by changing the length of the tie rods 27, 31 and 34, it is possible to maintain the modular platform elements 9H and 9F substantially horizontal and raised relative to the ground, maintaining the safety function of the system. Also in this case the length of the adjustable tie rods 27, 31 and 34 could be automated, controlling linear actuators or winches and commanding them according to the inclinations detected by inclinometers installed on the platform 9. In this way it is possible to maintain the platform 9 horizontal as the inclination of the guide antenna 3 changes relative to the ground.

In a variant of the safety system according to the invention, it is also possible to use sensitive mats or sensitive strips to place and fix onto the stepping plane of the platform 9. These mats or strips contain within them, buried in their thickness, sensitive devices 8 able to detect the presence of a person on the platform 9 through the pressure exerted by the person on the mats or on the strips. In these cases, the sensitive devices 8 can consist, for example, of normally open contacts that are closed by the weight of a person when he treads on the strip and, in this condition, they trigger the transmission of a control signal to the machine 1 to stop rotation. Once pressure is no longer applied on the strip or on the mat, the sensitive device 8 returns to the untriggered initial condition. In a wholly equivalent manner, on the basis of the structure of the electrical system of the safety system, the sensitive devices 8 can consist, for example, of normally closed contacts that are opened by the weight of a person when he treads on the strip and, in this condition, they trigger the transmission of a control signal to the machine 1 to stop rotation. Alternatively, the sensitive devices 8 buried in the mats or in the strips can consist of strain gauges that detect the deformation of the mat or of the strip when they are treaded on and, in this condition, they are triggered, sending the control signal to the machine 1 to stop rotation.

The sensitive mats or strips will advantageously be arranged on a platform 9 that has a gridded or holed stepping surface, obtaining mutually spaced apart strips on the platform 9 in order to leave spaces between adjacent strips that allow debris to traverse the gridded surface and fall under the platform 9 without accumulating thereon. The spacing between the strips must be sufficiently small to prevent a person from climbing onto the platform 9 stepping on the aforesaid spaces without triggering the sensitive devices 8. In the case of sensitive mats or strips, it is no longer indispensable to install loading cells on the pins of the hinges 11, 19, 21 and 22, or dynamometers on the ropes 25 and 26 or on the connection element 20 with variable length. Moreover, if sensitive mats or strips positioned on the sensitive platform 9 are used, an embodiment is also possible in which the platform 9, whilst remaining operatively connected to the machine 1, can be maintained at zero height relative to the ground on which the drilling machine 1 bears or, in other words, it can bear directly on the ground. The safety system fully maintains its functionalities, because these types of sensitive devices 8 do not require a displacement of the platform 9 in the vertical direction to be triggered.

The platform 9 could be able to slide relative to the guide antenna 3 in the longitudinal direction of the guide antenna 3. In this way, maintaining the base of the guide antenna 3 bearing on the ground, it will be possible to regulate the height of the platform 9 relative to the ground. This capability facilitates the operations for cleaning and removing debris from underneath the platform 9 and it can also prevent interference between the platform 9 and the ground, e.g. when it is necessary to carry out vertical drillings on an inclined ground. This solution is obtainable for example by means of a support framework 12 constructed in two slidable parts instead of with a single monolithic body. A first part of the framework 12 would remain hinged to the guide antenna 3 through the hinge 16, whilst the second part of the framework 12 could translate relative to the first part, by means of an appropriate actuator, moving the platform 9 along the guide antenna 3.

One of the types of machine 1 to which the safety system of the present invention can be applied is an excavating machine for performing water wells. In this case the machine body 2 can consist of a self-propelled truck or of a semi-trailer fitted with wheels. This solution considerably increases the speed of motion of the machine 1 and is advantageous when performing short-duration drilling operations at mutually distant sites. The guide antenna 3, substantially identical to the one used in the embodiments already described, in this case can be connected to the framework of the truck or of the semi-trailer through a hinge or kinematic mechanism 4 in such a way as to be able to shift from a reclined position for transport to a substantially vertical position for work. In these applications the drilling operations are substantially vertical and generally only small inclinations of the guide antenna 3 are required to offset the inclination of the ground on which the machine body 2 bears. Consequently, in these cases the kinematic mechanism can be highly simplified. Generally, a double head is used and drilling is accomplished advancing into the ground both with the drill shafts 6A (internally), and with casing pipes (externally to the shafts) which are then left in the borehole to constitute the walls of the well.

Also in this embodiment, the platform 9 associated with the drilling machine 1 is present. The platform 9 can be operatively connected to the guide antenna 3 or to the machine body 2. The platform 9 extends parallel to the horizontal plane X-Y and it is maintained raised from the ground at a minimum height to at least partially, but preferably completely cover the dangerous area. The platform 9 comprises orientable connecting and regulating means, e.g. a linear actuator, which enables to regulate the inclination of the platform 9 relative to the machine body 2 or to the guide antenna 3 to keep the platform 9 stationary in the operative position.

Also in this type of machines for drilling water wells, in order to add or subtract shafts to and from the drill stem, it is necessary for one or more operators to step onto the platform 9 to reach the drill axis. Also in this embodiment the safety system of the present invention further comprises one or more sensitive devices 8 operatively connected with the platform 9, configured to detect the presence of one or more persons on the platform 9 and thus inside or in proximity to the dangerous area. The sensitive devices 8 are of the same types already described for the previous embodiments of the safety system and can be installed in the same ways. If the presence of a person is detected, the safety system acts in the ways already described, interrupting at least the rotation of the shafts and possibly also the translation of the rotary head.

It has thus been seen that the safety system for drilling or excavating equipment according to the present invention achieves the purposes pointed out above, obtaining, in particular, the following advantages:
- the platform 9 has a light structure, e.g. thanks to the use of grids, it is positioned in the low portion of the guide antenna 3 and, during operating steps, it is always maintained near the ground. The low position of the platform 9 enables it to influence only minimally the stability of the machine 1, in particular to a far lesser extent compared to protection barriers according to the prior art, which are heavier and positioned higher;
- the safety system does not limit the drilling operations that can be carried out or the performance of the machine 1 because, thanks to the modularity of the elements 9A, 9B, 9C, 9D, 9E, 9F and 9H which constitute the platform 9, it is possible to adapt the shape of the platform 9 in the most convenient manner on the basis of the conformation of the environment and of the spaces in which the operations are to be carried out at the construction site;
- the platform 9 can also be mounted on machines with complex kinematic mechanisms, provided with additional axes of rotation such as the 90° articulation that allows the guide antenna 3 to rotate relative to an axis parallel to the drill axis. In these cases, the modularity of the platform 9 makes it possible to remove those elements that could interfere with the tracks of the machine 1, e.g. the lateral platform elements 9C, without compromising the efficiency of the safety system;
- the safety system, thanks to the use of the sensitive devices 8 and to the capability of inclining the platform 9 relative to the guide antenna 3, maintains its effectiveness even during working operations carried out with the guide antenna 3 inclined frontally, posteriorly, laterally and also when it is positioned horizontally. In all these configurations, the platform 9 extends to at least partially, but preferably completely, cover the dangerous area and the sensitive devices 8 still detect the presence of any persons on the sensitive platform 9;
- the fact that the platform 9 is operatively connected with the guide antenna 3, i.e. that the platform 9 is provided with connecting and regulating means that enable its connection to the guide antenna 3, causes the platform 9 to follow the movements of the guide antenna 3 during work operations without requiring continued disassembling and repositioning. The capability of adapting the orientation of the platform 9 relative to the guide antenna 3 through linkages or tie rods with adjustable length prevents the platform 9 from coming into contact with the ground and makes it possible to ensure a stable, safe and substantially horizontal bearing plane, on which site personnel can operate for the maintenance of the machine 1 or for loading and unloading the shafts 6A;
- both in reduced operating mode and in inactive conditions of the machine 1, the entire area above the platform 9 and the area surrounding the shafts 6A remain free and accessible for inspection and maintenance. Therefore, the platform 9 never hinders the loading or unloading operations of the shafts 6A, carried out using automated loader arms, rack or revolver loaders, or articulating cranes. In known systems, which adopt fixed or movable barriers, such barriers represent an obstacle to inspection and maintenance work even when the machine is inactive.

The safety system for drilling or excavating equipment of the present invention thus conceived can in any case be subject to numerous modifications and variants, without departing from the scope of the same inventive concept; in addition, all details can be replaced by technical equivalent elements. In practice, the materials used, as well as the shapes and dimensions, may be any according to the technical requirements.

The scope of protection of the invention, therefore, is defined by the appended claims.

## Claims

1. Drilling machine (1) comprising a guide antenna (3) and a rotary head (5), slidably coupled on said guide antenna (3) and provided for supporting and moving a drill stem (6), said drilling machine (1) comprising a safety system for controlling a dangerous area that at least partially delimits the area around said guide antenna (3), said safety system comprising:
- at least one sensitive platform (9), provided with connecting and regulating means (12, 13, 14, 16, 17) for connecting said at least one sensitive platform (9) to the drilling machine (1) at said guide antenna (3), said at least one sensitive platform (9) extending along a plane oriented so as to at least partially cover said dangerous area; and
- one or more sensitive devices (8) operatively connected to said at least one sensitive platform (9), configured to detect the presence of one or more operators on said at least one sensitive platform (9) and to generate, following said detection, a corresponding control signal adapted to immediately stop at least the rotation of the drill stem (6), so as to preserve the safety of the operators,
said drilling machine (1) being **characterised in that** said at least one sensitive platform (9), through said connecting and regulating means (12, 13, 14, 16, 17), is kept raised at a predefined height with respect to the ground.

2. Drilling machine (1) according to claim 1, **characterised in that** said connecting and regulating means (12, 13, 14, 16, 17) are configured for keeping said at least one sensitive platform (9) oriented according to a substantially horizontal plane.

3. Drilling machine (1) according to claim 1, **characterised in that** said connecting and regulating means (12, 13, 14, 16, 17) are configured for making said at least one sensitive platform (9) orientable relative to the drilling machine (1) to assume a desired access configuration.

4. Drilling machine (1) according to any claims 1 to 3, **characterised in that** the sensitive platform (9) is operatively connected to the guide antenna (3) through said connecting and regulating means (12, 13, 14, 16, 17).

5. Drilling machine (1) according to claim 4, **characterised in that** said connecting and regulating means (12, 13, 14, 16, 17) are orientable with respect to the guide antenna (3), said orientable connecting and regulating means allowing said sensitive platform (9) to extend along an oriented plane so as to allow the access to said one or more operators even when said guide antenna (3) is inclined by a predefined angle with respect to a vertical direction (Z).

6. Drilling machine (1) according to claim 5, **characterised in that** said orientable connecting and regulating means comprise a support framework (12) constrained to the base of the guide antenna (3), said sensitive platform (9) being connected to said support framework (12) through at least one first hinge (11) which has a rotation axis perpendicular to the longitudinal axis of said guide antenna (3).

7. Drilling machine (1) according to claim 6, **characterised in that** the support framework (12) is in turn hinged to the guide antenna (3) through a hinge or pin (16) having a rotation axis perpendicular to the axis of said first hinge (11), said hinge or pin (16) allowing the lateral inclinations of the support framework (12) and of the sensitive platform (9) with respect to said guide antenna (3), allowing said sensitive platform (9) to extend along a substantially horizontal plane even when said guide antenna (3) is inclined laterally by an angle (β) predefined with respect to a vertical direction (Z).

8. Drilling machine (1) according to claim 6 or 7, **characterised in that** said orientable connecting and regulating means can be actuated automatically and sensors capable of detecting the orientation of the sensitive platform (9) are further provided.

9. Drilling machine (1) according to claim 5, **characterised in that** the sensitive platform (9) is made with a composable and modular structure, comprising at least one bearing central element (9A), which always remains constrained to the guide antenna (3), and one or more modular platform elements (9B, 9C, 9D, 9E, 9F, 9G, 9H) moveable and/or demountable with respect to said central bearing element (9A).

10. Drilling machine (1) according to claim 9, **characterised in that** said orientable connecting and regulating means comprise a first hinge (19; 35), interposed between the guide antenna (3) and a first end of the sensitive platform (9), and at least one second hinge (22; 28; 32), interposed between a second end of the sensitive platform (9) and at least one connection element (20; 27; 31; 34), which is in turn connected to the guide antenna (3) and configured to be extended and shortened, as well as to vary the inclination thereof with respect to said guide antenna (3), so as to be adapted to the various possible inclinations of said guide antenna (3) and the various possible lengths of said sensitive platform (9).

11. Drilling machine (1) according to claim 10, **characterised in that** it comprises a second actuator (24) connected to the guide antenna (3) and to the connection element (20), said second actuator (24) allowing to orient said connection element (20), making it rotate around a third hinge (21), to always maintain the sensitive platform (9) raised with respect to the ground and oriented along a substantially horizontal plane even when said guide antenna (3) is inclined by a predefined angle (β) with respect to a vertical direction (Z).

12. Drilling machine (1) according to any claims 1 to 11, **characterised in that** it comprises a programmable control unit (10) associated with the sensitive devices (8) of the drilling machine (1), said programmable control unit (10) being capable of receiving and handling the signal generated by said one or more sensitive devices (8) so as to be able to intervene to stop at least the rotation of the drill stem (6) when said signal exceeds a predefined threshold value.

13. Drilling machine (1) according to any claims 1 to 12, **characterised in that** the sensitive platform (9) is provided with a stepping plane made by perforated grids, so as to avoid the accumulation of drilling debris on said sensitive platform (9) and to allow the outflow of possible liquids or debris projected from the drilling area towards the ground.

14. Drilling machine (1) according to any claims 1 to 13, **characterised in that** the sensitive platform (9) has a substantially circular or polygonal shape and it is provided with a hole or a passage at a drilling axis, which coincides with the rotation axis of the drill stem (6), so as to allow the passage of said drill stem (6) through said sensitive platform (9).

## Patentansprüche

1. Bohrmaschine (1), die einen Führungsmast (3) und einen Drehkopf (5) aufweist, der verschiebbar mit dem Führungsmast (3) verbunden ist und zum Stützen und Bewegen einer Bohrstange (6) bereitgestellt wird, wobei die Bohrmaschine (1) ein Sicherheitssystem zur Kontrolle eines Gefahrenbereichs aufweist, der den Bereich um den Führungsmast (3) herum mindestens teilweise begrenzt, wobei das Sicherheitssystem aufweist:
mindestens ein sensitives Podest (9), das mit Verbindungs- und Stelleinrichtungen (12, 13, 14, 16, 17) zum Verbinden des mindestens einen sensitiven Podests (9) mit der Bohrmaschine (1) an dem Führungsmast (3) ausgestattet ist, wobei sich das mindestens eine sensitive Podest (9) entlang einer Ebene erstreckt, die so ausgerichtet ist, dass sie den Gefahrenbereich mindestens teilweise abdeckt; und
eine oder mehrere sensitive Vorrichtungen (8), die mit dem mindestens einen sensitiven Podest (9) in Wirkverbindung stehen, die dazu ausgebildet sind, die Gegenwart eines oder mehrerer Bediener auf dem mindestens einen sensitiven Podest (9) zu erkennen und im Anschluss an das Erkennen ein entsprechendes Steuersignal zu erzeugen, das so ausgebildet ist, dass mindestens die Drehung der Bohrstange (6) unverzüglich so angehalten wird, dass die Sicherheit der Bediener aufrechterhalten wird,
wobei die Bohrmaschine (1) **dadurch gekennzeichnet ist, dass** das zumindest eine sensitive Podest (9) durch die Verbindungs- und Stelleinrichtungen (12, 13, 14, 16, 17) im Hinblick auf den Boden auf einer vordefinierten Höhe erhöht bleibt.

2. Bohrmaschine (1) nach Anspruch 1, **dadurch gekennzeichnet, dass** die Verbindungs- und Stelleinrichtungen (12, 13, 14, 16, 17) dazu ausgebildet sind, das mindestens eine sensitive Podest (9) entsprechend einer im Wesentlichen horizontalen Ebene ausgerichtet zu halten.

3. Bohrmaschine (1) nach Anspruch 1, **dadurch gekennzeichnet, dass** die Verbindungs- und Stelleinrichtungen (12, 13, 14, 16, 17) dazu ausgebildet sind, das mindestens eine sensitive Podest (9) im Verhältnis zu der Bohrmaschine (1) ausrichtbar zu machen, um eine gewünschte Gestaltung des Zugangs herzustellen.

4. Bohrmaschine (1) nach einem der Ansprüche 1 bis 3, **dadurch gekennzeichnet, dass** das sensitive Podest (9) durch die Verbindungs- und Stelleinrichtungen (12, 13, 14, 16, 17) mit dem Führungsmast (3) in Wirkverbindung steht.

5. Bohrmaschine (1) nach Anspruch 4, **dadurch gekennzeichnet, dass** die Verbindungs- und Stelleinrichtungen (12, 13, 14, 16, 17) im Hinblick auf den Führungsmast (3) ausrichtbar sind, wobei die ausrichtbaren Verbindungs- und Stelleinrichtungen dem sensitiven Podest (9) ermöglichen, sich entlang einer ausgerichteten Ebene so zu erstrecken, dass der Zugang für den einen oder die mehreren Bediener ermöglicht wird, selbst wenn der Führungsmast (3) in einem vordefinierten Winkel im Hinblick auf eine vertikale Richtung (Z) geneigt ist.

6. Bohrmaschine (1) nach Anspruch 5, **dadurch gekennzeichnet, dass** die ausrichtbaren Verbindungs- und Stelleinrichtungen ein Stützgestell (12) aufweisen, das an dem Unterteil des Führungsmasts (3) fixiert ist, wobei das sensitive Podest (9) durch mindestens ein erstes Gelenk (11), das eine Drehachse senkrecht zu der Längsasche des Führungsmasts (3) aufweist, mit dem Stützgestell (12) verbunden ist.

7. Bohrmaschine (1) nach Anspruch 6, **dadurch gekennzeichnet, dass** das Stützgestell (12) seinerseits durch ein Gelenk oder einen Stift (16) mit einer Drehachse senkrecht zu der Achse des ersten Gelenks (11) an den Führungsmast (3) angelenkt ist, wobei das Gelenk oder der Stift (16) seitliche Neigungen des Stützgestells (12) und des sensitiven Podests (9) im Hinblick auf den Führungsmast (3) ermöglicht, wodurch dem sensitiven Podest (9) ermöglicht wird, sich entlang einer im Wesentlichen horizontalen Ebene zu erstrecken, selbst wenn der Führungsmast (3) in einem Winkel (β) seitlich geneigt ist, der im Hinblick auf eine vertikale Richtung (Z) vordefiniert ist.

8. Bohrmaschine (1) nach Anspruch 6 oder 7, **dadurch gekennzeichnet, dass** die ausrichtbaren Verbindungs- und Stelleinrichtungen automatisch betätigt werden können und ferner Sensoren bereitgestellt werden, die in der Lage sind, die Ausrichtung des sensitiven Podests (9) zu erkennen.

9. Bohrmaschine (1) nach Anspruch 5, **dadurch gekennzeichnet, dass** das sensitive Podest (9) mit einem zusammensetzbaren und modularen Aufbau gestaltet ist, der mindestens ein mittiges Lagerelement (9A), das stets an dem Führungsmast (3) fixiert bleibt, und ein oder mehrere modulare Podestelemente (9B, 9C, 9D, 9E, 9F, 9G, 9H) aufweist, die im Hinblick auf das mittige Lagerelement (9A) verschiebbar und/oder abmontierbar sind.

10. Bohrmaschine (1) nach Anspruch 9, **dadurch gekennzeichnet, dass** die ausrichtbaren Verbindungs- und Stelleinrichtungen ein erstes Gelenk (19; 35), das zwischen dem Führungsmast (3) und einem ersten Ende des sensitiven Podests (9) angeordnet ist, und mindestens ein zweites Gelenk (22; 28; 32) aufweisen, das zwischen einem zweiten Ende des sensitiven Podests (9) und mindestens einem Verbindungselement (20; 27; 31; 34) angeordnet ist, das seinerseits mit dem Führungsmast (3) verbunden und dazu ausgebildet ist, verlängert und verkürzt zu werden wie auch dessen Neigung im Hinblick auf den Führungsmast (3) zu variieren, um es an die verschiedenen möglichen Neigungen des Führungsmasts (3) und die verschiedenen möglichen Längen des sensitiven Podests (9) anzupassen.

11. Bohrmaschine (1) nach Anspruch 10, **dadurch gekennzeichnet, dass** sie einen zweiten Aktor (24) aufweist, der mit dem Führungsmast (3) und dem Verbindungselement (20) verbunden ist, wobei der zweite Aktor (24) ermöglicht, das Verbindungselement (20) auszurichten, indem er es veranlasst sich um ein drittes Gelenk (21) zu drehen, um das sensitive Podest (9) im Hinblick auf den Boden stets erhöht und entlang einer im Wesentlichen horizontalen Ebene ausgerichtet zu halten, selbst wenn der Führungsmast (3) im Hinblick auf eine vertikale Richtung (Z) in einem vordefinierten Winkel (β) geneigt ist.

12. Bohrmaschine (1) nach einem beliebigen der Ansprüche 1 bis 11, **dadurch gekennzeichnet, dass** sie eine programmierbare Steuereinheit (10) aufweist, die den sensitiven Vorrichtungen (8) der Bohrmaschine (1) zugeordnet ist, wobei die programmierbare Steuereinheit (10) in der Lage ist, das Signal, das durch die eine oder mehreren sensitiven Einheiten (8) erzeugt wird, zu empfangen und so zu verarbeiten, dass sie in der Lage ist, so einzugreifen, dass mindestens die Drehung der Bohrstange (6) angehalten wird, wenn das Signal einen vordefinierten Schwellenwert überschreitet.

13. Bohrmaschine (1) nach einem beliebigen der Ansprüche 1 bis 12, **dadurch gekennzeichnet, dass** das sensitive Podest (9) so mit einer Trittfläche aus Lochgittern ausgestattet ist, dass das Ansammeln von Bohrklein auf dem sensitiven Podest (9) vermieden wird und das Austreten von möglichen Flüssigkeiten oder Bohrklein ermöglicht wird, die/das von dem Bohrbereich auf den Boden geworfen wird.

14. Bohrmaschine (1) nach einem beliebigen der Ansprüche 1 bis 13, **dadurch gekennzeichnet, dass** das sensitive Podest (9) eine im Wesentlichen runde oder polygonale Form aufweist und mit einem Loch oder einem Durchgang an einer Bohrachse ausgestattet ist, die mit der Drehachse der Bohrstange (6) übereinstimmt, so dass das Durchlaufen der Bohrstange (6) durch das sensitive Podest (9) ermöglicht wird.

## Revendications

1. Machine de forage (1) comprenant une antenne de guidage (3) et une tête rotative (5), accouplée de façon coulissante sur ladite antenne de guidage (3) et prévue pour supporter et déplacer une tige de forage (6), ladite machine de forage (1) comprenant un système de sécurité pour contrôler une zone dangereuse qui délimite au moins en partie la zone située autour de ladite antenne de guidage (3), ledit système de sécurité comprenant :
- au moins une plate-forme sensitive (9), pourvue de moyens de connexion et de régulation (12, 13, 14, 16, 17) pour raccorder ladite au moins une plate-forme sensitive (9) à la machine de forage (1) au niveau de ladite antenne de guidage (3), ladite au moins une plate-forme sensitive (9) s'étendant le long d'un plan orienté de façon à couvrir au moins partiellement ladite zone dangereuse ; et
- un ou plusieurs dispositifs sensitifs (8) connectés fonctionnellement à ladite au moins une plate-forme sensitive (9), configurés pour détecter la présence d'un ou de plusieurs opérateur(s) sur ladite au moins une plate-forme sensitive (9) et pour générer, suite à ladite détection, un signal de commande correspondant adapté pour arrêter immédiatement au moins la rotation de la tige de forage (6), afin de préserver la sécurité des opérateurs,
ladite machine de forage (1) étant **caractérisée en ce que** ladite au moins une plate-forme sensitive (9), par l'intermédiaire desdits moyens de connexion et de régulation (12, 13, 14, 16, 17), est maintenue levée à une hauteur prédéfinie par rapport au sol.

2. Machine de forage (1) selon la revendication 1, **caractérisée en ce que** lesdits moyens de connexion et de régulation (12, 13, 14, 16, 17) sont configurés pour maintenir ladite au moins une plate-forme sensitive (9) orientée selon un plan sensiblement horizontal.

3. Machine de forage (1) selon la revendication 1, **caractérisée en ce que** lesdits moyens de connexion et de régulation (12, 13, 14, 16, 17) sont configurés pour rendre ladite au moins une plate-forme sensitive (9) orientable par rapport à la machine de forage (1) pour prendre une configuration d'accès voulue.

4. Machine de forage (1) selon l'une quelconque des revendications 1 à 3, **caractérisée en ce que** la plate-forme sensitive (9) est connectée fonctionnellement à l'antenne de guidage (3) par l'intermédiaire desdits moyens de connexion et de régulation (12, 13, 14, 16, 17).

5. Machine de forage (1) selon la revendication 4, **caractérisée en ce que** lesdits moyens de connexion et de régulation (12, 13, 14, 16, 17) sont orientables par rapport à l'antenne de guidage (3), lesdits moyens de connexion et de régulation orientables permettant à ladite plate-forme sensitive (9) de s'étendre le long d'un plan orienté afin de permettre l'accès audit un ou plusieurs opérateur(s) même lorsque ladite antenne de guidage (3) est inclinée d'un angle prédéfini par rapport à une direction verticale (Z).

6. Machine de forage (1) selon la revendication 5, **caractérisée en ce que** lesdits moyens de connexion et de régulation orientables comprennent une ossature de support (12) solidaire de la base de l'antenne de guidage (3), ladite plate-forme sensitive (9) étant connectée à ladite ossature de support (12) par l'intermédiaire d'au moins une première charnière (11) qui a un axe de rotation perpendiculaire à l'axe longitudinal de ladite antenne de guidage (3).

7. Machine de forage (1) selon la revendication 6, **caractérisée en ce que** l'ossature de support (12) est elle-même montée sur charnière sur l'antenne de guidage (3) par l'intermédiaire d'une charnière ou d'un axe (16) ayant un axe de rotation perpendiculaire à l'axe de ladite première charnière (11), ladite charnière ou ledit axe (16) autorisant les inclinaisons latérales de l'ossature de support (12) et de la plate-forme sensitive (9) par rapport à ladite antenne de guidage (3), en permettant à ladite plate-forme sensitive (9) de s'étendre le long d'un plan sensiblement horizontal même quand ladite antenne de guidage (3) est inclinée latéralement d'un angle (β) prédéfini par rapport à une direction verticale (Z).

8. Machine de forage (1) selon la revendication 6 ou 7, **caractérisée en ce que** lesdits moyens de connexion et de régulation orientables peuvent être actionnés automatiquement et des capteurs capables de détecter l'orientation de la plate-forme sensitive (9) sont en outre prévus.

9. Machine de forage (1) selon la revendication 5, **caractérisée en ce que** la plate-forme sensitive (9) comporte une structure composable et modulaire, comprenant au moins un élément central porteur (9A), qui reste toujours solidaire de l'antenne de guidage (3), et un ou plusieurs éléments de plate-forme modulaires (9B, 9C, 9D, 9E, 9F, 9G, 9H) mobiles et/ou démontables par rapport audit élément porteur central (9A).

10. Machine de forage (1) selon la revendication 9, **caractérisée en ce que** lesdits moyens de connexion et de régulation orientables comprennent une première charnière (19 ; 35), intercalée entre l'antenne de guidage (3) et une première extrémité de la plate-forme sensitive (9), et au moins une deuxième charnière (22 ; 28 ; 32), intercalée entre une deuxième extrémité de la plate-forme sensitive (9) et au moins un élément de connexion (20 ; 27 ; 31 ; 34), qui est lui-même connecté à l'antenne de guidage (3) et configuré pour être étendu et raccourci, ainsi que pour faire varier l'inclinaison de celui-ci par rapport à ladite antenne de guidage (3), afin d'être adapté aux différentes inclinaisons possibles de ladite antenne de guidage (3) et aux différentes longueurs possibles de ladite plate-forme sensitive (9).

11. Machine de forage (1) selon la revendication 10, **caractérisée en ce qu'**elle comprend un deuxième actionneur (24) connecté à l'antenne de guidage (3) et à l'élément de connexion (20), ledit deuxième actionneur (24) permettant d'orienter ledit élément de connexion (20), en le faisant tourner autour d'une troisième charnière (21), pour toujours maintenir la plate-forme sensitive (9) levée par rapport au sol et orientée le long d'un plan sensiblement horizontal même lorsque ladite antenne de guidage (3) est inclinée d'un angle prédéfini (β) par rapport à une direction verticale (Z).

12. Machine de forage (1) selon l'une quelconque des revendications 1 à 11, **caractérisée en ce qu'**elle comprend une unité de commande programmable (10) associée aux dispositifs sensitifs (8) de la machine de forage (1), ladite unité de commande programmable (10) étant capable de recevoir et de gérer le signal produit par lesdits un ou plusieurs dispositifs sensitifs (8) afin d'être apte à intervenir pour arrêter au moins la rotation de la tige de forage (6) quand ledit signal dépasse une valeur de seuil prédéfinie.

13. Machine de forage (1) selon l'une quelconque des revendications 1 à 12, **caractérisée en ce que** la plate-forme sensitive (9) est pourvue d'un marchepied constitué de grilles perforées, afin d'éviter l'accumulation de débris de forage sur ladite plate-forme sensitive (9) et de permettre l'écoulement d'éventuels liquides ou débris projetés de la zone de forage vers le sol.

14. Machine de forage (1) selon l'une quelconque des revendications 1 à 13, **caractérisée en ce que** la plate-forme sensitive (9) est de forme substantiellement circulaire ou polygonale et est pourvue d'un trou ou d'un passage au niveau d'un axe de forage, qui coïncide avec l'axe de rotation de la tige de forage (6), afin de permettre le passage de ladite tige de forage (6) à travers ladite plate-forme sensitive (9).
